# FASCICULE DE BREVET EUROPEEN

(11) **EP 0 478 425 B1**
(45) Date de publication et mention de la délivrance du brevet: **30.11.1994**
(21) Numéro de dépôt: 91402506.9
(22) Date de dépôt: 20.09.1991
(51) Int. Cl.: G02B 27/14

(54) **Dispositif générateur de plusieurs faisceaux de lumière**
Vorrichtung zur Erzeugung von mehreren Lichtstrahlen
Device which generates a plurality of lightbeams

(30) Priorité: 28.09.1990 FR 9011991
(43) Date de publication de la demande: 01.04.1992
(73) Titulaire: THOMSON-CSF, 75008 Paris (FR)
(72) Inventeur: Nicolas, Christophe, F-92045 Paris la Défense (FR)
(74) Mandataire: Guérin, Michel

(56) Documents cités:
- EP-A- 0 307 203
- PATENT ABSTRACTS OF JAPAN,vol.9,no.174(P-374)(1897),19 juillet 1985 ;JP-A-60 049 314

## Description

L'invention se rapporte à un dispositif produisant simultanément plusieurs faisceaux de lumière correspondant à des domaines spectraux différents.

On connaît de dispositifs générateurs de faisceaux de lumière correspondant à des longueurs d'onde différente du type comportant des miroirs dichroïques, voir par exemple le document EP-A-0 307 203.

L'invention s'applique particulièrement (mais non exclusivement) à l'éclairage d'écrans de modulation spatiale de la lumière dans les projecteurs d'images couleur.

Dans les projecteurs vidéo d'images, couleur ou non, l'image à projeter est formée sur la surface de l'écran modulateur spatial de lumière, ce dernier étant constitué généralement par une cellule matricielle à cristal liquide. La lumière fournie par une source de lumière est modulée spatialement par la matrice, et l'image projetée résulte de cette modulation.

L'un des problèmes de ces projeteurs est que leur rendement lumineux est faible, de l'ordre de quelques pour-cent, et ce problème est encore plus sensible avec les projeteurs couleurs. En effet, dans un grand nombre de projecteurs couleurs, l'image polychrome est obtenue par la superposition de trois images monochromes. Dans ce type de projecteur couleur, il est courant d'utiliser une unique source produisant un faisceau de lumière blanche ou faisceau primaire et de séparer ce faisceau primaire en trois faisceaux monochromes correspondant chacun à l'une des couleurs primaires. Chaque faisceau monochrome est modulé par un modulateur spatial, et les trois faisceaux monochromes modulés correspondant chacun à l'une des couleurs primaires sont ensuite superposés pour former l'image.

Le faible rendement lumineux des projecteurs d'images est lié à différentes causes, dont l'une réside dans les pertes de lumière dues aux différences entre la forme de l'écran modulateur spatial à éclairer et la forme de la section du faisceau de lumière provenant de la source lumineuse.

Ainsi par exemple, dans le cadre du développement des téléviseurs à haute définition et à grand écran, l'image est prévue avec un format 16/9 (rapport de la longueur à la largeur). Un système projecteur d'image répondant à cette définition utilise un écran modulateur spatial ayant ce format 16/9. Dans ce cas, en supposant, suivant le cas le plus courant, que le faisceau de lumière venant de la source ait une section circulaire, la fraction d'énergie lumineuse utilisée pour éclairer le rectangle que constitue l'écran modulateur spatial, correspond seulement au rapport SR/SF de la surface SR de ce rectangle à la surface SF de la section du faisceau, soit 0,54 dans le meilleur des cas, c'est-à-dire lorsque SR est aussi grande que possible, au format 16/9, tout en étant contenu dans SF.

La présente invention propose un agencement nouveau de la source de lumière et des moyens qui séparent le faisceau de lumière blanche ou faisceau primaire, en plusieurs faisceaux secondaires ayant chacun un domaine spectral différent et une section rectangulaire. L'invention s'applique de manière avantageuse quand au moins deux faisceaux secondaires sont nécessaires, particulièrement avec un format 16/9, quelle que soit la forme de la section du faisceau primaire, et son utilisation notamment dans les projecteurs vidéo couleurs permet d'améliorer de manière très intéressante l'efficacité lumineuse de ces derniers.

Selon l'invention, un dispositif générateur de faisceaux de lumière, comprenant une source lumineuse produisant un faisceau de lumière dit faisceau primaire dont le spectre couvre sensiblement celui de la lumière visible, un séparateur de lumière, du type comportant au moins deux miroirs sélectifs en longueur d'onde, éclairé par le faisceau primaire et produisant en retour au moins deux faisceaux secondaires correspondant à des longueurs d'onde différentes, le premier et le second des faisceaux secondaires étant obtenus à l'aide respectivement d'un premier et d'un second desdits miroirs sélectifs en longueur d'onde, est caractérisé en ce que les premier et second miroirs sélectifs sont disposés de façon à intercepter des parties différentes de la section du faisceau primaire, et en ce que le séparateur de lumière comporte en outre une face arrière constituant au moins partiellement un miroir total, la face arrière étant d'une part située à l'opposé de la source lumineuse par rapport aux premier et second miroirs sélectifs, et étant d'autre part dans un plan perpendiculaire à un axe de propagation du faisceau primaire.

L'invention sera mieux comprise à la lecture de la description qui suit, faite à titre d'exemple non limitatif, en référence aux dessins annexés, parmi lesquels :
- la figure 1 montre schématiquement le dispositif générateur de faisceaux de l'invention,
- la figure 2 montre par une vue en perspective un prisme représenté à la figure 1.

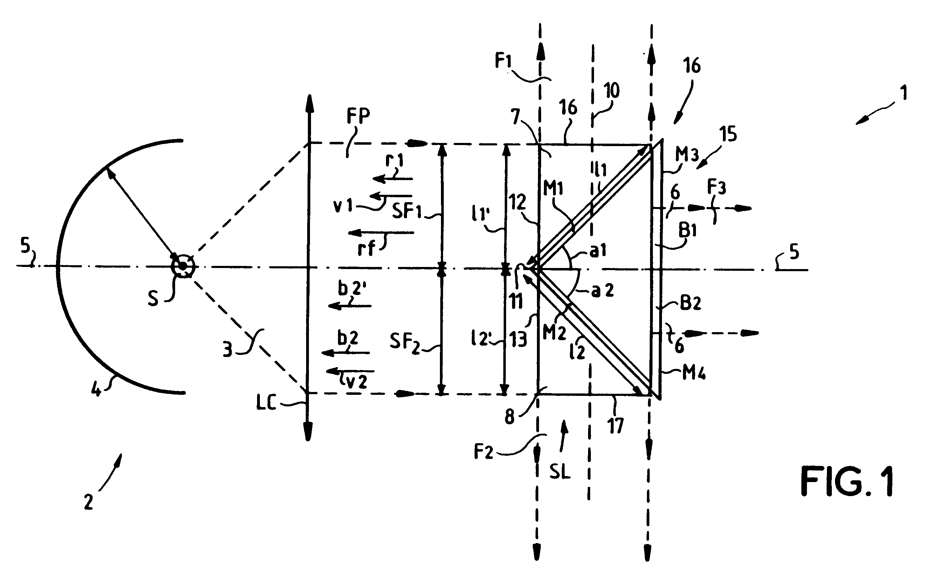

La figure 1 montre à titre d'exemple non limitatif un dispositif générateur 1 de faisceaux de lumière conforme à l'invention.

Le dispositif générateur 1 comprend une source lumineuse 2 produisant un faisceau de lumière appelé faisceau primaire FP. Le faisceau primaire FP est destiné à engendrer plusieurs faisceaux secondaires et son spectre doit couvrir les domaines spectraux de ces faisceaux secondaires. Dans le cas par exemple d'une application à un projecteur d'images couleur le spectre du faisceau primaire FP correspond sensiblement à celui de la lumière visible, de manière à permettre la production de trois faisceaux secondaires F1, F2, F3 monochromes, l'un pour le bleu, un autre pour le rouge et le troisième pour le vert.

Le faisceau primaire FP est un faisceau à rayons sensiblement parallèles, tel qu'obtenu avec des sources lumineuses de lumière blanche couramment disponibles dans le commerce, du type comportant un réflecteur parabolique par exemple. On peut aussi utiliser à cet effet, comme montré à la figure 1, une source S classique de lumière blanche placée entre un réflecteur sphérique 4 et une lentille de collimation LC et sur l'axe optique 5 de cette dernière, au centre de courbure du réflecteur sphérique et au foyer de la lentille LC. La source S produit une lumière 3 collimatée par la lentille LC de façon à former le faisceau primaire FP ; l'axe optique de la lentille collimatrice constituant l'axe de propagation 5 du faisceau primaire FP.

Le faisceau primaire FP se propage en direction d'un dispositif séparateur de lumière SL du type comportant plusieurs miroirs sélectifs en longueur d'onde, chaque miroir sélectif étant réfléchissant pour une longueur d'onde donnée. De tels miroirs sélectifs existent dans les cubes dichroïques (couramment disponibles dans le commerce), qui permettent notamment d'une part de réfléchir deux faisceaux de couleurs différentes (bleue et rouge par exemple) dans des directions opposées, et d'autre part de transmettre un troisième faisceau d'une troisième couleur, verte par exemple.

Suivant une caractéristique de l'invention, le séparateur de lumière SL comporte un premier et un second miroirs sélectifs en longueur d'onde M1, M2, interposés sur le trajet du faisceau primaire FP de façon que chaque miroir sélectif intercepte une partie SF1, SF2 différente de la section du faisceau primaire FP. Le premier miroir M1 réfléchit par exemple les longueurs d'onde qui correspondent au bleu avec lesquelles il réalise un premier faisceau secondaire F1 ; et le second miroir sélectif M2 réfléchit par exemple les longueurs d'onde qui correspondent au rouge, avec lesquelles il réalise un second faisceau secondaire F2.

Le séparateur de lumière SL comporte en outre une face arrière 15 au moins partiellement réfléchissante de toutes les longueurs d'onde, disposée à l'opposé de la source lumineuse 2 par rapport au premier et au second miroirs sélectifs M1, M2. Dans l'exemple non limitatif décrit, la face arrière 15 comporte une fenêtre 6 destinée à transmettre un troisième faisceau secondaire F3.

Dans un mode de réalisation préféré, le premier et le second miroirs sélectifs M1, M2 ainsi que la face arrière 15 sont portés par un bloc 16 transparent à la lumière (en verre par exemple), formant un prisme à section triangulaire vu sur la figure 1 selon sa section ; la face arrière 15 étant sur la face hypoténuse du prisme, les 2 miroirs sélectifs M1, M2 étant sur les deux autres faces.

Une première et une seconde pièce transparente 7, 8 sont appliquées respectivement sur le premier et le second miroirs sélectifs M1, M2 afin d'éviter des angles de réfraction importants au niveau des miroirs sélectifs M1, M2. La forme de ces pièces 7, 8 est telle que leur face d'entrée respectivement 12, 13 et leur face de sortie 16, 17 soient normales respectivement aux rayons incidents et émergents.

Suivant une autre caractéristique de l'invention, les premier et second miroirs sélectifs M1, M2, vus depuis la source lumineuse 2, ont chacun une surface apparente SA rectangulaire.

Les deux miroirs sélectifs M1, M2 sont inclinés sur l'axe de propagation 5, avec lequel ils forment de préférence (mais pas impérativement) des angles d'inclinaisons a1, a2 égaux ; la surface apparente SA étant égale à la surface réelle SR multipliée par le sinus de l'angle d'inclinaison a1, a2.

Ainsi le premier et le second miroirs sélectifs réfléchissent respectivement un premier et un second faisceaux secondaires F1, F2 correspondant au bleu et au rouge, et la section de chacun de ces deux faisceaux secondaires est égale à la surface apparente du miroir sélectif l'ayant engendré.

En fait l'invention trouve l'une de ses applications les plus intéressantes quand on confère à chaque faisceau secondaire F1, F2 une section rectangulaire au format 16/9 ; ceci du fait que de tels formats placés l'un à côté de l'autre constituent une surface presque carrée.

En effet, le premier et le second miroirs sélectifs M1, M2 sont disposés côte à côte, leur longueur est dans un plan perpendiculaire à celui de la figure et leur largeur 11, 12 est plus grande que leur largeur apparente 11′, 12′ vues depuis l'ensemble lumineux 2. Si leur largeur 11, 12 est telle, qu'en fonction des angles d'inclinaison a1, a2, leur largeur apparente 11′, 12′ leur confère une surface apparente au format 16/9, la surface totale de la section interceptée du faisceau primaire FP par les deux miroirs sélectifs M1, M2 est proche d'un carré.

En conséquence, avec le montage de l'invention, on améliore le rapport de la quantité d'énergie prélevée à la quantité d'énergie disponible dans le faisceau primaire FP. Quand on confère aux surfaces apparentes des miroirs sélectifs M1, M2 un format 16/9, on confère aussi un format 16/9 à la section de chacun des premier et second faisceaux secondaires F1, F2, et le rapport de l'énergie lumineuse prélevée à l'énergie disponible dans un faisceau primaire passe à 0, 63, du fait que l'on inscrit alors simultanément, et côte à côte deux rectangles au format 16/9 chacun dans la section circulaire du faisceau primaire ; alors que pour un seul rectangle inscrit, comme dans l'art antérieur, ce rapport est de 0,54 ainsi qu'il a été indiqué dans le préambule.

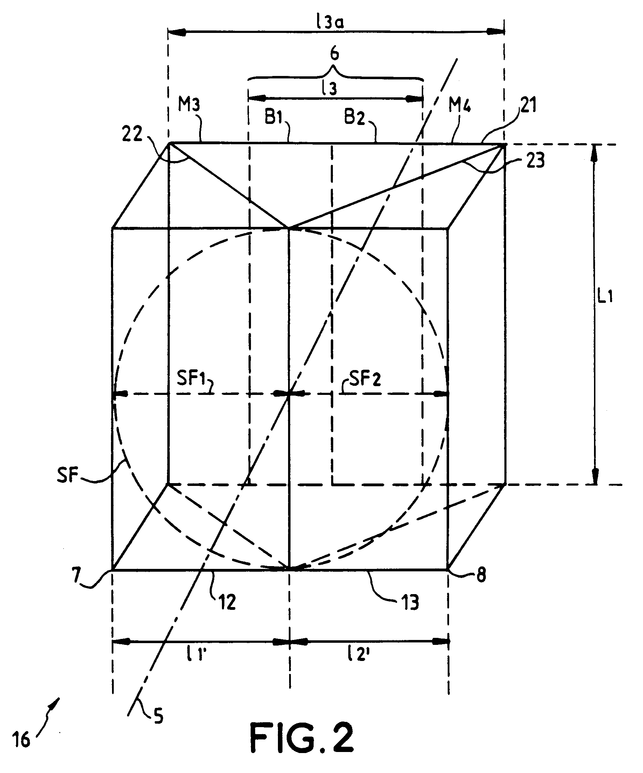

La figure 2 est une vue en perspective du bloc ou prisme 16, qui permet d'illustrer l'inscription des miroirs sélectifs dans la section du faisceau primaire FP.

Les premier et second miroirs sélectifs M1, M2 et la face arrière 15 ne sont pas matérialisés sur la figure 2, mais ils sont représentés respectivement par une première et une seconde faces 22, 23 et une face hypothénuse 21 du prisme 16 qui les porte : le premier miroir sélectif M1 étant sur la face 22 ; le second miroir M2 étant sur la face 23, et la face arrière 15 étant sur la face hypoténuse 21. Ces miroirs ou faces ont tous une même longueur L1 donnée par une hauteur du prisme 16.

La première et la seconde pièces transparentes 7, 8 sont appliquées respectivement contre les faces 22 et 23 du prisme 16 et comportent une même longueur L1 que ces dernières ; les faces d'entrée 12, 13 de ces pièces sont normales à l'axe de propagation 5 du faisceau primaire FP.

D'autre part, on observe que ces faces d'entrée 12,13 ont une même largeur 11′, 12′ que la largeur apparente des miroirs sélectifs M1, M2.

Le faisceau primaire FP a une section droite circulaire qui est matérialisée sur la figure 2 par un cercle SF en traits pointillés. On observe que les deux faces d'entrée 12, 13 (chacune au format 16/9) disposées côte à côte ajoutent leur largeur 11′, 12′ pour former une surface presque carrée inscrite dans la section du faisceau primaire FP. La première et la seconde faces d'entrée 12, 13 ont une même surface et un même format que les miroirs sélectifs M1, M2 et ces faces d'entrée 12, 13 interceptent respectivement la première et la seconde partie SF1, SF2 de la section du faisceau primaire FP.

La face arrière 15 comporte la fenêtre 6 déjà mentionnée ainsi qu'un troisième et un quatrième miroirs M3, M4 disposés de part et d'autre de cette fenêtre 6.

La fenêtre 6 a une longueur L1 égale et parallèle à la longueur des faces 12, 13 des pièces 7, 8, c'est-à-dire égale à la longueur des premier et second miroirs sélectifs M1, M2 ; et sa largeur 13 est égale aux largeurs apparentes 11′, 12′ de ces derniers alors que la face arrière 15 a une largeur 13a double de celle de la fenêtre 6. Dans l'exemple non limitatif décrit, la fenêtre 6 est centrée sur l'axe de propagation 5, de telle manière qu'elle peut être considérée comme étant constituée par une première et une seconde bande B1, B2, situées de part et d'autre de l'axe de propagation 5 et formant respectivement une première et une seconde moitié de fenêtre ayant chacune la longueur L1 : la première moitié B1 intercepte avec le troisième miroir M3, la première partie SF1 de la section du faisceau primaire FP ; et la seconde moitié B2 intercepte avec le quatrième miroir M4 la seconde partie SF2 de cette section de faisceau primaire.

En référence à nouveau à la figure 1, on voit que suivant une autre caractéristique de l'invention, la face arrière 15 est perpendiculaire à l'axe de propagation 5, de manière à réfléchir vers la source lumineuse 2, les composantes du faisceau primaire FP non utilisées pour former les faisceaux secondaires F1, F2, F3.

Dans l'exemple non limitatif représenté à la figure 1, les angles d'inclinaison a1, a2 des premier et second miroirs M1, M2 sont de 45°, de telle manière que le premier et le second faisceaux secondaires F1, F2 se propagent avec des directions opposées, sur un second axe 10 qui forme un angle de 90° avec l'axe de propagation 5 du faisceau primaire FP.

Comme il apparaît sur la figure 1, le premier et le second miroirs sélectifs M1, M2 sont disposés de manière symétrique par rapport à l'axe de propagation 5 et leur longueur est centrée par rapport à ce dernier. Ces deux miroirs sélectifs se joignent par leur longueur ; leur longueur étant perpendiculaire au plan de la figure, leur jonction 11 est également perpendiculaire au plan de la figure, et dans l'exemple non limitatif décrit, cette jonction 11 est orientée vers la source lumineuse 2 et elle est située dans un même plan que l'axe de propagation 5.

La fenêtre 6 est transparente uniquement pour le domaine spectral désiré pour le troisième faisceau secondaire F3, à savoir dans l'exemple pour la longueur d'onde correspondant au vert, et elle réfléchit les autres composantes. La fenêtre 6 étant centrée sur l'axe de propagation 5 du faisceau primaire FP, cet axe constitue également l'axe du troisième faisceau secondaire F3.

Dans cette configuration, le fonctionnement est le suivant : le premier miroir sélectif M1 est intéressé par la première partie SF1 du faisceau primaire : d'une part, il en réfléchit la composante relative au bleu, pour constituer le premier faisceau secondaire F1 et, d'autre part, il est transparent pour les autres longueurs d'onde de cette partie du faisceau primaire, et il laisse donc passer le rouge et le vert en direction de la face arrière 15. Vis-à-vis de cette première partie SF1 du faisceau primaire qui a traversé le premier miroir sélectif M1 (agissant pour le bleu), la face arrière 15 présente le troisième miroir M3 et une première moitié ou bande B1 de la fenêtre 6 uniquement transparente au vert ; le troisième miroir M3 est un miroir total, c'est-à-dire qu'il réfléchit toutes les longueurs d'onde.

En conséquence, d'une part en ce qui concerne la lumière qui se propage en direction de la première moitié B1 de fenêtre 6 : seule la composante verte traverse cette dernière pour constituer une part du troisième faisceau secondaire F3, et les autres composantes sont réfléchies vers la source lumineuse 2 par cette première moitié B1 ; d'autre part, en ce qui concerne la lumière qui se propage en direction du troisième miroir M3, elle est intégralement réfléchie également vers la source lumineuse 2.

En résumé, d'une part le troisième miroir M3 réfléchit vers la source 2 toutes les composantes ; mais la composante bleue ayant été auparavant déviée par le premier miroir sélectif M1, seules des composantes verte et rouge sont réfléchies suivant l'axe de propagation 5 en direction de la source 2, par le troisième miroir M3, composantes qui sont symbolisées sur la figure 1 respectivement par une flèche repérée r1 et une flèche repérée v1. D'autre part, en ce qui concerne la lumière qui se propage en direction de la première moitié B1 de fenêtre, suite à l'action du premier miroir sélectif M1 elle ne comporte plus les composantes relatives au bleu ; le vert étant transmis par cette première moitié B1 de fenêtre, seule une composante rouge (symbolisée par une flèche repérée rf) est réfléchie en direction de la source lumineuse 2, parallèlement à l'axe de propagation 5.

On trouve un fonctionnement semblable pour la seconde partie SF2 de la section du faisceau primaire, à la différence que le second miroir sélectif M2 agit pour le rouge. Le second miroir sélectif M2 est disposé sur le trajet de la seconde partie SF2 de la section du faisceau primaire FP, et d'une part il en réfléchit la composante relative au rouge afin de constituer le second faisceau secondaire F2. D'autre part, le second miroir sélectif M2 est transparent pour les autres longueurs d'onde ; il laisse donc passer les composantes vertes et bleues contenues dans cette seconde partie SF2 de la section de faisceau primaire. Cette seconde partie SF2 est elle-même divisée en deux fractions, dont l'une se propage en direction du quatrième miroir M4, et dont l'autre se propage en direction de la seconde moitié B2 de la fenêtre 6.

Le quatrième miroir M4 réfléchit toutes les longueurs d'onde en direction de la source lumineuse 2, parallèlement à l'axe 5 : il réfléchit donc en direction de la source 2 le vert et le bleu lesquels sont les seules composantes transmises par le second miroir sélectif M2 ; lesquelles composantes sont matérialisées sur la figure 1 respectivement par une flèche v2 et une flèche b2. La seconde moitié B2 de fenêtre est transparente uniquement pour le vert, afin de contribuer à l'obtention du troisième faisceau secondaire F3 ; elle réfléchit donc vers la source lumineuse 2 toutes les autres composantes, à savoir dans cet exemple le bleu comme illustré sur la figure 1 par une flèche repérée b2′.

Cette disposition des premier et second miroirs sélectifs M1, M2 et de la face arrière 15 permet d'obtenir les trois faisceaux secondaires F1, F2, F3 de longueurs d'onde différentes et à sections rectangulaires, notamment au format 16/9, à partir de la section du faisceau primaire FP. Elle permet en outre de renvoyer vers la source lumineuse 2, parallèlement à l'axe de propagation 5, la lumière qui n'a pas été utilisée pour constituer les faisceaux secondaires F1, F2, F3. Grâce au réflecteur 4, cette énergie lumineuse s'ajoute à celle venant d'être produite pour constituer le faisceau primaire FP, et elle est répartie dans l'ensemble de la section de ce dernier. Cette lumière recyclée tend ainsi à augmenter la part de lumière utile à constituer les faisceaux secondaires F1, F2, F3.

Les premier et second miroirs sélectifs M1, M2 et la face arrière 15 sont constitués à partir d'éléments en eux-mêmes classiques. Les miroirs sélectifs M1, M2 peuvent être réalisés par exemple par un empilement de couches minces diélectriques suivant la technique classique des filtres interférentiels.

Ces miroirs sélectifs M1, M2 peuvent être réalisés directement sur les faces du prisme 16, mais ils peuvent également être réalisés sur des plaques de verre et disposés ensuite entre le prisme 16 et les pièces transparentes 7, 8.

La fenêtre 6 étant constituée de deux parties ou bandes B1,B2 toutes deux transparentes au vert, mais dont la première réfléchit le bleu et la seconde réfléchit le rouge, ces bandes peuvent être constituées par des miroirs sélectifs. L'important est qu'elles réfléchissent toutes lumières incidentes autres que le vert et elles peuvent être remplacées par un filtre - passe bande vert.

Bien entendu les longueurs d'onde attribuées à chaque faisceau secondaire peuvent être permutées, il suffit de réaliser chaque miroir sélectif pour qu'il réfléchisse la gamme de longueur d'onde voulue.

Il est à noter en outre que la description qui précède de la face arrière 15 s'applique à la production de trois faisceaux secondaires F1, F2, F3, de sections rectangulaires. Mais l'invention conserve son intérêt même quand seulement deux faisceaux secondaires sont nécessaires : dans ce cas, il suffit de remplacer la fenêtre 6 (transparente aux longueurs d'onde du troisième faisceau secondaire F3) par un miroir total réfléchissant toutes les longueurs d'onde, d'une même manière que les troisième et quatrième miroirs M3, M4.

## Revendications

1. Dispositif générateur de faisceaux de lumière, comprenant une source lumineuse (2) produisant un faisceau de lumière dit faisceau primaire (FP) dont le spectre couvre sensiblement celui de la lumière visible, un séparateur de lumière (SL), du type comportant au moins deux miroirs (M1, M2) sélectifs en longueur d'onde, éclairé par le faisceau primaire et produisant en retour au moins deux faisceaux secondaires (F1, F2, F3) correspondant à des longueurs d'onde différentes, le premier et le second des faisceaux secondaires (F1, F2) étant obtenus à l'aide respectivement d'un premier et d'un second desdits miroirs sélectifs (M1, M2) en longueur d'onde, caractérisé en ce que les premier et second miroirs sélectifs (M1, M2) sont disposés de façon à intercepter des parties (SF1, SF2) différentes de la section du faisceau primaire (FP), et en ce que le séparateur de lumière (SL) comporte en outre une face arrière (15) constituant au moins partiellement un miroir total (M3, M4), la face arrière (15) étant d'une part située à l'opposé de la source lumineuse par rapport aux premier et second miroirs sélectifs, et étant d'autre part dans un plan perpendiculaire à un axe de propagation (5) du faisceau primaire.

2. Dispositif générateur suivant la revendication 1, caractérisé en ce que la face arrière (15) comporte une fenêtre (6) transparente vis-à-vis de longueurs d'onde différentes de celles des premier et second faisceaux secondaires (F1, F2), de manière à produire un troisième faisceau secondaire (F3).

3. Dispositif générateur suivant l'une des revendications précédentes, caractérisé en ce que les premier et second miroirs sélectifs (M1, M2) sont inclinés sur l'axe de propagation (5) suivant des angles d'inclinaison (a1, a2) et en ce que vus depuis la source lumineuse (2) ces deux miroirs sélectifs (M1, M2) présentent des surfaces apparentes de formes rectangulaires.

4. Dispositif générateur suivant la revendication 3, caractérisé en ce que les surfaces apparentes des premier et second miroirs sélectifs (M1, M2) sont au format 16/9.

5. Dispositif générateur suivant la revendication 3, caractérisé en ce que les premier et second miroirs sélectifs (M1, M2) sont joints sur l'axe de propagation (5).

6. Dispositif générateur suivant la revendication 5, caractérisé en ce que la jonction des premier et second miroirs sélectifs (M1, M2) est orientée vers la source lumineuse (2).

7. Dispositif générateur suivant la revendication 2, caractérisé en ce que la fenêtre (6) a une surface égale à une surface apparente des premier et second miroirs sélectifs (M1, M2) et un même format.

8. Dispositif générateur suivant la revendication 7, caractérisé en ce que la fenêtre (6) est sensiblement centrée sur l'axe du propagation (5).

9. Dispositif générateur suivant la revendication 6, caractérisé en ce qu'une première partie (B1) de la fenêtre (6) est réfléchissante au moins vis-à-vis des longueurs d'onde constituant le second faisceau secondaire (F2), et en ce qu'une seconde partie (B2) de cette fenêtre est réfléchissante au moins vis-à-vis des longueurs d'onde constituant le premier faisceau secondaire (F1).

10. Dispositif générateur suivant la revendication 9, caractérisé en ce que la première et la seconde partie (B1, B2) de la fenêtre (6) constituent chacune un miroirs sélectif.

11. Dispositif générateur suivant l'une des revendications précédentes, caractérisé en ce qu'il comporte un bloc transparent (16) formant un prisme à section triangulaire, et en ce que les premier et second miroirs sélectifs (M1, M2) et la face arrière (15) sont disposés chacun sur une face dudit prisme.

12. Dispositif générateur suivant la revendication 11, caractérisé en ce que les premier et second miroirs sélectifs (M1, M2) sont disposés chacun entre le prisme (16) et une pièce transparente (7, 8) ayant une face d'entrée (12, 13) et une face de sortie par lesquelles passent respectivement une partie du faisceau primaire (FP) et un faisceau secondaire (F1, F2), la pièce transparente étant telle que la face d'entrée et la face de sortie sont respectivement normales à l'axe du faisceau primaire (FP) et à l'axe du faisceau secondaire (F1, F2).

13. Dispositif générateur suivant l'une des revendications précédentes, caractérisé en ce que les miroirs sélectifs (M1, M2) sont constitués par des empilements de couches minces diélectriques.

## Patentansprüche

1. Erzeugungsvorrichtung für Lichtbündel, mit einer Lichtquelle (2), die ein Primärbündel (FP) genanntes Lichtbündel erzeugt, dessen Spektrum im wesentlichen das des sichtbaren Lichts abdeckt, sowie einer Lichttrennvorrichtung (SL), die wenigstens zwei wellenlängenselektive Spiegel (M1, M2) aufweist, von dem Primärbündel beleuchtet wird und im Gegenzug wenigstens zwei Sekundärbündel (F1, F2, F3) erzeugt, die verschiedenen Wellenlängen zugeordnet sind, wobei das erste und das zweite Sekundärbündel (F1, F2) mit Hilfe des ersten bzw. des zweiten wellenlängenselektiven Spiegels (M1, M2) erhalten werden, dadurch gekennzeichnet, daß der erste und der zweite selektive Spiegel (M1, M2) so angeordnet sind, daß sie unterschiedliche Teile (SF1, SF2) des Querschnitts des Primärbündels (FP) auffangen, und daß die Lichttrennvorrichtung (SL) außerdem eine hintere Seite (15) aufweist, die wenigstens teilweise einen Totalreflexionsspiegel (M3, M4) bildet, wobei die hintere Seite (15) einerseits bezüglich des ersten und des zweiten selektiven Spiegels zu der Lichtquelle entgegengesetzt angeordnet ist und andererseits sich in einer zu einer Ausbreitungsachse (5) des Primärbündels senkrechten Ebene befindet.

2. Erzeugungsvorrichtung nach Anspruch 1, dadurch gekennzeichnet, daß die hintere Seite (15) ein Fenster (6) enthält, das für Wellenlängen durchlässig ist, die von den Wellenlängen des ersten und des zweiten Sekundärbündels (F1, F2) verschieden ist, so daß ein drittes Sekundärbündel (F3) erzeugt wird.

3. Erzeugungsvorrichtung nach einem der vorhergehenden Ansprüche, dadurch gekennzeichnet, daß der erste und der zweite selektive Spiegel (M1, M2) bezüglich der Ausbreitungsachse (5) um Neigungswinkel (a1, a2) geneigt sind und daß die beiden selektiven Spiegel (M1, M2) von der Lichtquelle (2) aus gesehen scheinbare Flächen mit rechteckiger Form besitzen.

4. Erzeugungsvorrichtung nach Anspruch 3, dadurch gekennzeichnet, daß die scheinbaren Flächen des ersten und des zweiten selektiven Spiegels (M1, M2) ein Format 16/9 besitzen.

5. Erzeugungsvorrichtung nach Anspruch 3, dadurch gekennzeichnet, daß der erste und der zweite selektive Spiegel (M1, M2) auf der Ausbreitungsachse (5) zusammengefügt sind.

6. Erzeugungsvorrichtung nach Anspruch 5, dadurch gekennzeichnet, daß die Stelle, an der der erste und der zweite selektiven Spiegels (M1, M2) zusammengefügt sind, zur Lichtquelle (2) gerichtet ist.

7. Erzeugungsvorrichtung nach Anspruch 2, dadurch gekennzeichnet, daß das Fenster (6) eine Fläche besitzt, die zu den scheinbaren Flächen des ersten und des zweiten selektiven Spiegels (M1, M2) gleich ist, und ein gleiches Format hat.

8. Erzeugungsvorrichtung nach Anspruch 7, dadurch gekennzeichnet, daß das Fenster (6) zur der Ausbreitungsachse (5) im wesentlichen zentrisch ist.

9. Erzeugungsvorrichtung nach Anspruch 6, dadurch gekennzeichnet, daß ein erster Abschnitt (B1) des Fensters (6) wenigstens für die das zweite Sekundärbündel (F2) bildenden Wellenlängen reflektierend ist und daß ein zweiter Abschnitt (B2) dieses Fensters wenigstens für die das erste Sekundärbündel (F1) bildenden Wellenlängen reflektierend ist.

10. Erzeugungsvorrichtung nach Anspruch 9, dadurch gekennzeichnet, daß der erste und der zweite Abschnitt (B1, B2) des Fensters (6) jeweils einen selektiven Spiegel bilden.

11. Erzeugungsvorrichtung nach einem der vorhergehenden Ansprüche, dadurch gekennzeichnet, daß sie einen transparenten Block (16) aufweist, der ein Prisma mit dreieckigem Querschnitt bildet, und daß der erste und der zweite selektive Spiegel (M1, M2) sowie die hintere Seite (15) jeweils auf einer der Seiten des Prismas angeordnet sind.

12. Erzeugungsvorrichtung nach Anspruch 11, dadurch gekennzeichnet, daß der erste und der zweite selektive Spiegel (M1, M2) jeweils zwischen dem Prisma (16) und einem transparenten Stück (7, 8) mit einer Eintrittsseite (12, 13) und einer Austrittsseite angeordnet sind, durch die jeweils ein Teil des Primärbündels (FP) und ein Sekundärbündel (F1, F2) fallen, wobei das transparente Stück ein solches ist, daß die Eintrittsseite und die Austrittsseite senkrecht zur Achse des Primärbündels (FP) bzw. zur Achse des Sekundärbündels (F1, F2) sind.

13. Erzeugungsvorrichtung nach einem der vorhergehenden Ansprüche, dadurch gekennzeichnet, daß die selektiven Spiegel (M1, M2) durch eine Schichtung von dünnen dielektrischen Schichten gebildet sind.

## Claims

1. Device for generating a light beam, comprising a light source (2) producing a light beam referred to as the primary beam (FP), the spectrum of which substantially covers that of visible light, a light splitter (SL), of the type including at least two wavelength-selective mirrors (M1, M2), illuminated by the primary beam and producing in consequence at least two secondary beams (F1, F2, F3), corresponding to differing wavelengths, the first one and the second one of the secondary beams (F1, F2), being obtained with the aid, respectively, of a first one and of a second one of said wavelength-selective mirrors (M1, M2), characterized in that the first and second selective mirrors (M1, M2) are disposed in such a manner as to intercept differing parts (SF1, SF2) of the cross-section of the primary beam (FP), and in that the light splitter (SL) further includes a rear face (15) at least partially constituting a full mirror (M3, M4), the rear face (15) being on the one hand situated opposite the light source in relation to the first and second selective mirrors, and being on the other hand in a plane perpendicular to an axis of propagation (5) of the primary beam.

2. Generating device according to Claim 1, characterized in that the rear face (15) includes a window (6) which is transparent to wavelengths different from those of the first and second secondary beams (F1, F2), in such a manner as to produce a third secondary beam (F3).

3. Generating device according to one of the preceding claims, characterized in that the first and second selective mirrors (M1, M2) are inclined in relation to the axis of propagation (5) by angles of inclination (a1, a2), and in that, seen from the light source (2), these two selective mirrors (M1, M2) exhibit apparent surfaces of rectangular shapes.

4. Generating device according to Claim 3, characterized in that the apparent surfaces of the first and second selective mirrors (M1, M2) are of the 16/9 format.

5. Generating device according to Claim 3, characterized in that the first and second selective mirrors (M1, M2) are joined on the axis of propagation (5).

6. Generating device according to Claim 5, characterized in that the junction of the first and second selective mirrors (M1, M2) is oriented towards the light source (2).

7. Generating device according to Claim 2, characterized in that the window (6) has a surface area equal to an apparent surface area of the first and second selective mirrors (M1, M2) and the same format.

8. Generating device according to Claim 7, characterized in that the window (6) is substantially centred on the axis of propagation (5).

9. Generating device according to Claim 6, characterized in that a first part (B1) of the window (6) is reflective at least to the wavelengths constituting the second secondary beam (F2), and in that a second part (B2) of this window is reflective at least to the wavelengths constituting the first secondary beam (F1).

10. Generating device according to Claim 9, characterized in that the first and the second part (B1, B2) of the window (6) each constitute a selective mirror.

11. Generating device according to one of the preceding claims, characterized in that it includes a transparent block (16) forming a prism of triangular cross section, and in that the first and second selective mirrors (M1, M2) and the rear face (15) are each disposed on one face of said prism.

12. Generating device according to Claim 11, characterized in that the first and second selective mirrors (M1, M2) are each disposed between the prism (16) and a transparent component (7, 8) having an entrance face (12, 13) and an exit face, through which faces there pass respectively a part of the primary beam (FP) and a secondary beam (F1, F2), the transparent component being such that the entrance face and the exit face are respectively normal to the axis of the primary beam (FP) and to the axis of the secondary beam (F1, F2).

13. Generating device according to one of the preceding claims, characterized in that the selective mirrors (M1, M2) are constituted by stacks of thin dielectric layers.
